# EUROPEAN PATENT APPLICATION

(11) **EP 4 516 757 A2**
(43) Date of publication of application: **05.03.2025**
(21) Application number: 25382017.9
(22) Date of filing: 14.01.2025
(51) Int. Cl.: C04B 22/00, C04B 28/04, C04B 40/00, C04B 111/70, C04B 111/34

(54) **CEMENTITIOUS COMPOSITION COMPRISING EXPANSIVE AGENT**

(71) Applicant: Sika Technology AG, 6340 Baar (CH)
(72) Inventor: CALAMA, Juan Antonio, 28108 Madrid (ES); ERTL, Andreas, 86159 Augsburg (DE); SCHNÜRCH, Denis, 86159 Augsburg (DE); FREY, Dominik, 86159 Augsburg (DE); HÖTZL, Klaus-Dieter, 86159 Augsburg (DE); MUNOZ, Angel Luis, 28108 Madrid (ES)
(74) Representative: Sika Patent Attorneys

(57) **Abstract**

The present invention relates to a cementitious composition comprising Ordinary Portland cement and at least one expansive agent, wherein the expansive agent comprises ye'elimite, calcium sulfate anhydrite and free lime, and wherein the mass ratio of ye'elimite to free lime and a minimum content of free lime are predefined.

## Description

### Technical Field

The present invention relates to a cementitious composition comprising at least one expansive agent, wherein said agent is defined by a specific mass ratio of ye'elimite to free lime and by a minimum content of free lime. Furthermore, the present invention relates to the use of said expansive agent to reduce early shrinkage of the cementitious composition.

### Background of the invention

Cementitious formulations, especially grout formulations used in high-stress applications, such as those in wind turbine foundations, face significant challenges related to shrinkage and the associated risk of cracking. To mitigate these issues, expansive agents are often incorporated into wind grout compositions. These agents induce controlled volumetric expansion during the curing process, compensating for shrinkage and ensuring the grout maintains dimensional stability and resistance to cracking under heavy operational loads.

Modern expansive agents for concrete and cement primarily include calcium sulfoaluminate (CSA)-based systems, lime-based agents, and magnesium oxide (MgO). CSA agents are widely used for their ability to form ettringite during hydration, effectively compensating for shrinkage.

For example, Yu et al. (2017) "Developing shrinkage-compensating shotcrete mixtures from calcium sulfoaluminate, portland cement, and calcium sulfate" (CIM 2017 Convention, Montreal, Canada) investigated the combined use of calcium sulfoaluminate (CSA) cement, ordinary Portland cement (OPC), and calcium sulfate for shrinkage compensation in shotcrete. Their findings indicated that the expansion rate of the hydraulic composition depends on the CSA content in the binder (Volume change results, p. 8).

Similarly, CSA influences the expansion of cementitious compositions when used as part of an admixture, rather than as a binder. For instance, WO2023022172A1 (Denka Co., Ltd.) disclosed a cement admixture comprising a specific non-hydraulic compound and ye'elimite, with the ye'elimite content defined within a predetermined range [0009].

Another example of a cement admixture for shrinkage compensation, also comprising ye'elimite, is described in WO2021215509A1 (Denka Co., Ltd.). This admixture includes a combination of free lime, anhydrous gypsum, ye'elimite, and ternesite, with a specified mass ratio between ye'elimite and ternesite [0007].

Therefore, there is still a need for improved cementitious compositions, especially for improved cementitious compositions for grouting wind structures with enhanced dimensional stability, i.e. reduced early shrinkage.

### Summary of the invention

It is an object of the present invention to provide a cementitious composition characterized by a reduced early shrinkage, especially a cementitious composition characterized by a reduced early shrinkage, which is suitable for grouting wind turbine structures.

It has surprisingly been found that expansive agents defined by a specific mass ratio of ye'elimite to free lime and by a minimum content of free lime are particularly suitable to control shrinkage of cementitious compositions. The object of the present invention is therefore solved by the subject matter of claim 1.

Further aspects of the present invention are the subject of independent claims. Preferred embodiments are the subject matter of dependent claims.

### Ways to carry out the invention

In a first aspect the present invention relates to a cementitious composition comprising Ordinary Portland cement and at least one expansive agent,
wherein the expansive agent comprises
   a) ye'elimite,
   b) calcium sulfate anhydrite,
   c) free lime,
wherein a mass ratio of ye'elimite to free lime is between 0.01 and 1.5, preferably between 0.01 and 1.1, most preferably between 0.1 and 1.0,
and wherein the content of free lime is at least 10 wt. %, preferably at least 15 wt. %, relative to the total dry weight of the expansive agent.

A cementitious composition as used herein refers to materials that comprise at least one cementitious binder.

A cementitious binder, in the context of the present invention, is a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum plaster or white lime).

Within the present context, the Ordinary Portland Cement (OPC), is a CEM I under standard EN 197-1:2011. However, other OPC classified, for example, under the relevantASTM, JIS or Chinese standards is also suitable. According to further embodiments, the OPC is a white cement. According to further embodiments, the OPC is a grey cement.

The term "ye'elimite" as used in the context of the present invention refers to a calcium sulfoaluminate of the chemical composition Ca₄Al₆O₁₂(SO₄). It is described as the group 7.BC.15 in the Strunz classification (s. IMA/CNMNC List of Mineral Names published by the International Mineralogical Association). It hydrates in the presence of calcium sulfate to form ettringite, thereby contributing to the improvement of the initial strength.

According to further preferred embodiments, the Blaine surface of the ye'elimite is between 1000 and 10000 cm²/g, preferably between 1500 and 5000 cm²/g, measured as described in the standard EN 196-6:2010.

The expansive agent may further comprise other minerals, such as alite, belite, ternesite, calcite or ellestadite.

Calcium sulfate anhydrite, also known as anhydrite, is an anhydrous form of calcium sulfate. It is used in cement to regulate setting time by controlling the hydration of tricalcium aluminate, which helps to prevent flash setting and improves workability. It also contributes to shrinkage control and enhances dimensional stability, particularly in shrinkage-compensating and expansive cement formulations.

According to further preferred embodiments, the Blaine surface of calcium sulfate anhydrite is between 1000 and 10000 cm²/g, preferably between 3000 and 6000 cm²/g, measured as described in the standard EN 196-6:2010.

According to further preferred embodiments, calcium sulfate anhydrite has a particle size D50 in the range 0.01 - 0.09 mm, according to the standard ISO 13320:2009.

Free lime, also known as free calcium oxide, can be used as an admixture for cement or concrete to enhance specific properties, such as improving early strength development or controlling expansion. It reacts with water to form calcium hydroxide.

According to further preferred embodiments, the content of free lime is between 10 and 45 wt. %, preferably between 15 and 45 wt. %, more preferably between 15 and 30 wt. %, relative to the total dry weight of the expansive agent.

According to further preferred embodiments, the mass ratio of ye'elimite to free lime is between 0.01 and 1.5 and the content of free lime is at least 10 wt. %, relative to the total dry weight of the expansive agent.

According to further preferred embodiments, the mass ratio of ye'elimite to free lime is between 0.01 and 1.5 and the content of free lime is at least 15 wt. %, relative to the total dry weight of the expansive agent.

According to further preferred embodiments, the mass ratio of ye'elimite to free lime is between 0.01 and 1.1 and the content of free lime is at least 10 wt. %, relative to the total dry weight of the expansive agent.

According to further preferred embodiments, the mass ratio of ye'elimite to free lime is between 0.01 and 1.1 and the content of free lime is at least 15 wt. %, relative to the total dry weight of the expansive agent.

According to further preferred embodiments, the mass ratio of ye'elimite to free lime is between 0.1 and 1.0 and the content of free lime is at least 10 wt. %, relative to the total dry weight of the expansive agent.

According to further preferred embodiments, the mass ratio of ye'elimite to free lime is between 0.1 and 1.0 and the content of free lime is at least 15 wt. %, relative to the total dry weight of the expansive agent.

According to further preferred embodiments, the mass ratio of ye'elimite to free lime is between 0.01 and 1.5 and the content of free lime is at least 20 wt. %, relative to the total dry weight of the expansive agent.

According to further preferred embodiments, the mass ratio of ye'elimite to free lime is between 0.01 and 1.1 and the content of free lime is at least 20 wt. %, relative to the total dry weight of the expansive agent.

According to further preferred embodiments, the mass ratio of ye'elimite to free lime is between 0.1 and 1.0 and the content of free lime is at least 20 wt. %, relative to the total dry weight of the expansive agent.

According to preferred embodiments, the expansive agent comprises between 15 and 55 wt. %, preferably between 25 and 55 wt. % of calcium sulfate anhydrite, relative to the total dry weight of the expansive agent.

According to further preferred embodiments, the mass ratio of ye'elimite to free lime is between 0.01 and 1.5, the content of free lime is at least 10 wt. % and the content of calcium sulfate anhydrite is between 15 and 55 wt. %, relative to the total dry weight of the expansive agent.

According to further preferred embodiments, the mass ratio of ye'elimite to free lime is between 0.01 and 1.5, the content of free lime is at least 15 wt. % and the content of calcium sulfate anhydrite is between 15 and 55 wt. %, relative to the total dry weight of the expansive agent.

According to further preferred embodiments, the mass ratio of ye'elimite to free lime is between 0.01 and 1.1, the content of free lime is at least 10 wt. % and the content of calcium sulfate anhydrite is between 15 and 55 wt. %, relative to the total dry weight of the expansive agent.

According to further preferred embodiments, the mass ratio of ye'elimite to free lime is between 0.01 and 1.1, the content of free lime is at least 15 wt. % and the content of calcium sulfate anhydrite is between 15 and 55 wt. %, relative to the total dry weight of the expansive agent.

According to further preferred embodiments, the mass ratio of ye'elimite to free lime is between 0.1 and 1.0, the content of free lime is at least 10 wt. % and the content of calcium sulfate anhydrite is between 15 and 55 wt. %, relative to the total dry weight of the expansive agent.

According to further preferred embodiments, the mass ratio of ye'elimite to free lime is between 0.1 and 1.0, the content of free lime is at least 15 wt. % and the content of calcium sulfate anhydrite is between 15 and 55 wt. %, relative to the total dry weight of the expansive agent.

According to further preferred embodiments, the mass ratio of ye'elimite to free lime is between 0.01 and 1.5, the content of free lime is at least 20 wt. % and the content of calcium sulfate anhydrite is between 15 and 55 wt. %, relative to the total dry weight of the expansive agent.

According to further preferred embodiments, the mass ratio of ye'elimite to free lime is between 0.01 and 1.1, the content of free lime is at least 20 wt. % and the content of calcium sulfate anhydrite is between 15 and 55 wt. %, relative to the total dry weight of the expansive agent.

According to further preferred embodiments, the mass ratio of ye'elimite to free lime is between 0.1 and 1.0, the content of free lime is at least 20 wt. % and the content of calcium sulfate anhydrite is between 15 and 55 wt. %, relative to the total dry weight of the expansive agent.

According to further preferred embodiments, the mass ratio of ye'elimite to free lime is between 0.01 and 1.5, the content of free lime is at least 10 wt. % and the content of calcium sulfate anhydrite is between 25 and 55 wt. %, relative to the total dry weight of the expansive agent.

According to further preferred embodiments, the mass ratio of ye'elimite to free lime is between 0.01 and 1.5, the content of free lime is at least 15 wt. % and the content of calcium sulfate anhydrite is between 25 and 55 wt. %, relative to the total dry weight of the expansive agent.

According to further preferred embodiments, the mass ratio of ye'elimite to free lime is between 0.01 and 1.1, the content of free lime is at least 10 wt. % and the content of calcium sulfate anhydrite is between 25 and 55 wt. %, relative to the total dry weight of the expansive agent.

According to further preferred embodiments, the mass ratio of ye'elimite to free lime is between 0.01 and 1.1, the content of free lime is at least 15 wt. % and the content of calcium sulfate anhydrite is between 25 and 55 wt. %, relative to the total dry weight of the expansive agent.

According to further preferred embodiments, the mass ratio of ye'elimite to free lime is between 0.1 and 1.0, the content of free lime is at least 10 wt. %, and the content of calcium sulfate anhydrite is between 25 and 55 wt. %, relative to the total dry weight of the expansive agent.

According to further preferred embodiments, the mass ratio of ye'elimite to free lime is between 0.1 and 1.0, the content of free lime is at least 15 wt. %, and the content of calcium sulfate anhydrite is between 25 and 55 wt. %, relative to the total dry weight of the expansive agent.

According to further preferred embodiments, the mass ratio of ye'elimite to free lime is between 0.01 and 1.5, the content of free lime is at least 20 wt. %, and the content of calcium sulfate anhydrite is between 25 and 55 wt. %, relative to the total dry weight of the expansive agent.

According to further preferred embodiments, the mass ratio of ye'elimite to free lime is between 0.01 and 1.1, the content of free lime is at least 20 wt. % and the content of calcium sulfate anhydrite is between 25 and 55 wt. %, relative to the total dry weight of the expansive agent.

According to further preferred embodiments, the mass ratio of ye'elimite to free lime is between 0.1 and 1.0, the content of free lime is at least 20 wt. % and the content of calcium sulfate anhydrite is between 25 and 55 wt. %, relative to the total dry weight of the expansive agent.

According to preferred embodiments, the content of the expansive agent is 0.1 to 5.0 wt. %, preferably 0.1 to 3.0 wt. %, relative to the dry weight of the cementitious composition.

According to preferred embodiments, the cementitious composition of the present invention additionally comprises at least one supplementary cementitious material.

A supplementary cementitious material (SCM) is a material used in conjunction with or as a partial replacement of Portland cement to enhance both the fresh and hardened properties of cementitious mixtures. A mixture of Portland cement with one SCM is called a blended cement, whereas a mixture of Portland cement with more than one SCM is called a composite cement. SCMs can exhibit hydraulic or pozzolanic activity, or both, contributing to the formation of additional cementitious compounds through their reaction with calcium hydroxide in the presence of water.

Common examples of SCMs are fly ash, slag, silica fume, limestone filler and pozzolans. Pozzolans can be natural pozzolans and/ or synthetic pozzolans. Pozzolanic materials, within the present context, are the materials as defined in the standard EN 197-1:2011.

The composite cement, in the context of the present invention, can be cement of the type CEM II, CEM III, CEM IV or CEM V according to EN 197-1:2011.

According to preferred embodiments, the supplementary cementitious material is selected from the group consisting of steelmaking slag, ironmaking slag, ferronickel slag, copper slag, aluminum dross, limestone, fly ash, bottom ash, silica fume, nanosilica, volcanic ashes, pumice, trass, clays, bauxite, bio-waste residue, biochar, ashes from biowaste, ashes from municipal waste, waste glass, or mixtures thereof.

According to preferred embodiments, the supplementary cementitious material comprises silica fume.

Silica fume, also known as microsilica, in the present context refers to a by-product of the silicon and ferrosilicon production processes. It consists of extremely fine particles of amorphous silicon dioxide that have a high surface area, typically ranging from 15000 to 30000 m²/kg. These particles are less than 1 micrometer in diameter and exhibit pozzolanic properties. Silica fume provides high abrasion and impact resistant, as well as corrosion resistance.

According to preferred embodiments, the supplementary cementitious material further comprises ironmaking slag, preferably ground granulated blast furnace slag.

A ground granulated blast furnace slag (GGBS), within the present context, is obtained by quenching molten iron slag from a blast furnace in water or steam, to produce a glassy, granular product that is then dried and ground into a fine powder.

According to further preferable embodiments, GGBS has a Blaine surface of between 2000 - 12000 cm²/g, preferably between 4000 - 6000 cm²/g or 6000 - 8000 cm²/g. Blaine fineness can be measured according to standard EN 196-6:2018.

According to further preferred embodiments, the cementitious composition of the present invention has a compressive strength at 28 days of at least 50 N/mm², preferably at least 70 N/mm², most preferably at least 80 N/mm², measured according to EN 12390-3:2019 on 150 × 300 mm cylinders at 20 °C.

According to further preferred embodiments, the cementitious composition of the present invention has a flexural strength at 28 days of at least 10 N/mm², preferably of at least 15 N/mm², most preferably of at least 20 N/mm², determined according to EN 196-1:2016 or ASTM C348-14.

According to preferred embodiments, the content of the supplementary cementitious material is at least 10 wt. %, preferably at least 15 wt. %, more preferably at least 20 wt. %, relative to the dry weight of the cementitious composition.

All features and embodiments as described above, also apply to this aspect.

A further aspect of the present invention is directed to a hardened cementitious composition obtainable by curing the composition according to any of the preceding claims.

According to preferred embodiments, the hardened cementitious composition is a grouted connection. A grouted connection (GC) is a crucial element in the wind turbine construction, as it distributes loads (axial, bending, torsion, combination of two or more) between grouted elements and ensures the overall stability of the structure.

All features and embodiments as described above, also apply to this aspect.

In yet another aspect, the present invention relates to the method for grouting a wind turbine structure, said method comprising the steps of
(i) mixing water and the cementitious composition as described above to obtain a mixture,
(ii) pumping said mixture (i) into a void to be grouted, and
(iii) hardening the mixture of step (ii) in the void.

According to preferred embodiments, the method of the present invention can be used for installation of the offshore and/ or onshore wind turbine structures.

According to still further embodiments, the method of the present invention can be used to repair existing wind turbine structures.

According to still further embodiments, the method of the present invention can be used for maintenance of existing wind turbine structures. The maintenance of wind turbine structures, in the present context, refers to proactively addressing potential weaknesses and ensuring long-term durability of the structures.

All features and embodiments as described above, also apply to this aspect.

In yet another aspect the present invention relates to the use of an expansive agent to reduce early shrinkage of a cementitious composition, wherein the expansive agent comprises
d) ye'elimite,
e) calcium sulfate anhydrite,
f) free lime,

wherein a mass ratio of ye'elimite to free lime is between 0.01 and 1.5, preferably between 0.01 and 1.1, most preferably between 0.1 and 1.0,
and wherein the content of free lime is at least 10 wt. %, preferably at least 15 wt. %, relative to the total dry weight of the expansive agent.

Shrinkage and/or expansion starts with the addition of water to a cementitious composition and continues during setting and hardening. Early shrinkage refers to the phenomenon where the material experiences volume reduction shortly after it is poured and begins to harden. This occurs during the initial stages of hydration, the chemical reaction between cement and water that forms the matrix. As water is consumed during hydration, the volume of the cementitious composition decreases, leading to shrinkage.

The term "reduced early shrinkage" within the present context relates to a reduction of shrinkage of a cementitious composition as compared to a non-inventive cementitious composition without addition of expansive agent comprising ye'elimite, calcium sulfate anhydrite and free lime, and having a predefined mass ratio of ye'elimite to free lime and a minimum content of free lime.

According to preferred embodiments, the reduction of early shrinkage is at least 5%, preferably at least 10%, more preferably at least 15%, in comparison to the cementitious composition not according to the present invention.

According to preferred embodiments, the expansive agent comprises between 15 and 55 wt. %, preferably between 25 and 55 wt. % of calcium sulfate anhydrite, relative to the total dry weight of the expansive agent.

According to preferred embodiments, the content of the expansive agent in the cementitious composition is between 0.1 to 5.0 wt. %, preferably between 0.1 to 3.0 wt. %, relative to the dry weight of the cementitious composition.

According to preferred embodiments, the cementitious composition comprises Ordinary Portland cement and at least one supplementary cementitious material, preferably silica fume and/or ground granulated blast furnace slag.

According to preferred embodiments, the cementitious composition comprises at least 10 wt. %, preferably at least 15 wt. %, preferably at least 20 wt. % of the supplementary cementitious material, relative to the dry weight of the cementitious composition.

All features and embodiments as described above, also apply to this aspect.

### Examples

The following Table 1 shows an overview of materials used.

**Table 1: Raw materials used**

| | |
|---|---|
| Cement | CEM I, 52.5 R |
| Sand | Quartz sand and silica sand, particle sizes: 0.1 - 4 mm |
| Silica fume | Particle size: 0.45 µm |
| Expansive agent | See Tab. 2 |

The mineral phases of the tested expansive agents, as presented in Table 2, were determined by X-ray powder diffraction.

A "BRUKER D8 Advance" powder diffractometer from BRUKER AXS was used to investigate the phase composition and to take the images for the Rietveld analysis. This device has a Bragg-Brentano geometry with Θ/Θ coupling. The diffractometer was equipped with a Cu tube (wavelength Cukα1= 1.54056 Ä) and a silicon strip "LynxEye" detector in "continuous scan" mode.

### Measurement parameters (for qualitative and quantitative analysis)

| | |
|---|---|
| Voltage | 40 kV |
| Current | 40 mA |
| Measurement range | 5° - 55 °2Θ |
| Step size | 0.02 °2Θ |
| Time per step | 0.2 s |
| Divergenz slit (primary) | 0.4° fixed |
| Opening angle of detector | 3.7 mm |

### Qualitative analysis

As a result of the analysis, the measured intensities of the incident X-rays are plotted against the angle of incidence Θ. After connecting the individual measuring points, an X-ray diffractogram is obtained.

The evaluation was carried out using the BRUKER-AXS software DIFFRAC.EVA and the ICDD^{®} PDF2 database (reference database of powder diffraction data). Thus, it is possible to quickly identify known compounds by comparing the measurement with the powder database (ICDD-JCPDS). Finally, the quantitative Rietveld refinement can be attempted with this data.

### Quantitative analysis

The quantification of the individual phases was carried out using the Rietveld method implemented in the BRUKER-AXS software "TOPAS". In this method, a diffraction pattern calculated based on known structural models is adapted to the measured diffraction pattern by varying phase-specific parameters.

**Table 2: Expansive agents, (EA, all amount in wt. %, relative to the total dry weight of the expansive agent)**

| Mineral phase EA | **Ye'elimite** | **Anhydrite** | **Free lime** | **Ye'elimite** : **Anhydrite*¹** | **Ye'elimite** : **Free lime*²** |
|---|---|---|---|---|---|
| EA1 | 26.8 | 45.5 | 14.3 | 0.589 | 1.874 |
| EA2 | 20.8 | 38.4 | 23.2 | 0.542 | 0.897 |
| EA3 | 8 | 26.9 | 40.6 | 0.297 | 0.197 |
| EA4 | 0.5 | 26.8 | 27.2 | 0.019 | 0.018 |
| EA5 | 12.1 | 51.1 | 15.7 | 0.237 | 0.771 |

| | | | | | |
|---|---|---|---|---|---|
| *¹ mass ratio of ye'elimite to anhydrite *² mass ratio of ye'elimite to free lime | | | | | |

The compositions of tested grout specimens are given in Table 3.

**Table 3: Tested grout specimens (all amount in wt. %, relative to overall dry grout composition)**

| **Example Component** | **Ref. 1** | **Inv.1** | **Inv.2** | **Inv.3** | **Inv.4** |
|---|---|---|---|---|---|
| Cement | 33 | 33 | 33 | 33 | 33 |
| Silica fume | 4.7 | 4.7 | 4.7 | 4.7 | 4.7 |
| Sand | 60,97 | 60, 97 | 60, 97 | 60, 97 | 60, 97 |
| EA1 | 0.5 | - | - | - | |
| EA2 | - | 0.5 | - | - | - |
| EA3 | - | - | 0.5 | - | - |
| EA4 | - | - | - | 0.5 | - |
| EA5 | - | - | - | - | 0.5 |
| Additives*¹ | 0.83 | 0.83 | 0.83 | 0.83 | 0.83 |

| | | | | | |
|---|---|---|---|---|---|
| *¹ plasticizer, defoamer, accelerator | | | | | |

Dry mixes were prepared by thoroughly mixing the dry materials as indicated in above Table 3 on a V mixer until visually homogeneous. Water was then added in the amount of 7 wt. % in reference to the total mass of a dry grout composition. The mixing continued for an additional 5 minutes in a Hobart mixer. The liquid grout compositions were then immediately used for the following testing.

The expansion was measured after 24 h from casting with the Schleibingers Shrinkage Cone (Schleibinger Geräte Teubert u. Greim GmbH), which uses a laser beam to register the expansion of the tested material.

The early shrinkage was tested according to the internal method. The method used a test set up described in 12617-4:2002, having an additional displacement sensor placed in the hole of one of the mould holders to check the displacement from casting. The measurement procedure was adjusted to simulate real-life conditions when grouting wind turbine towers and, therefore, the top of the mould was covered with a lid to prevent contact with oxygen. In contrary to the autogenous shrinkage procedure according to ASTM C1698:2019, the movement of the grout paste was restricted to only one direction, where the sensor was situated. The displacement of grout paste upon hardening, i.e. shrinkage and/or expansion, was registered continuously and is presented in Table 3.

**Table 4: Testing of grouts (example Ref. 1 is not according to the present invention; examples Inv. 1-Inv.4 are according to the present invention)**

| **Example Tested value** | **Ref. 1** | **Inv.1** | **Inv.2** | **Inv.3** | **Inv.4** |
|---|---|---|---|---|---|
| Expansion @24h [µm] | 270 | n/a | 380 | 310 | 300 |
| Shrinkage*¹ @2d [mm/m] | -0.138 | -0.092 | -0.1 | -0.113 | -0.11 |
| Shrinkage*¹ @28d [mm/m] | -0.41 | -0.344 | -0.335 | -0.346 | -0.356 |

| | | | | | |
|---|---|---|---|---|---|
| *¹ positive values indicate expansion and negative values indicate shrinkage | | | | | |

Example Ref.1 is not according to the present invention and corresponds to the grout composition comprising expansive additive not according to the present invention. Examples Inv.1-Inv.4 are according to the present invention and correspond to the grout composition comprising expansive additive according to the present invention, however varied by the content of mineral phases and their ratios.

Low early expansion can result in lower prestresses within the material, which may lead to cracking if drying shrinkage is significant. Controlling early shrinkage is particularly critical in wind grout applications, where elements are typically demolded within 1 to 3 days after casting. In such cases, insufficient expansion combined with high shrinkage makes materials more prone to cracking. However, this issue can be addressed by selecting expansive agents according to the present invention. This is demonstrated in the inventive examples, all of which exhibit higher early expansion compared to the reference example (cf. Inv.1-Inv.4 and Ref.1).

Moreover, the inventive compositions show a significant reduction in shrinkage when compared to the non-inventive cementitious composition. Shrinkage was reduced by 18-33% relative to the reference. Notably, the shrinkage measured at 28 days post-casting was also lower in the inventive examples, with an improvement of 13-18% over the reference sample.

## Claims

1. A cementitious composition comprising Ordinary Portland cement and at least one expansive agent,
wherein the expansive agent comprises
a) ye'elimite,
b) calcium sulfate anhydrite,
c) free lime,
wherein a mass ratio of ye'elimite to free lime is between 0.01 and 1.5, preferably between 0.01 and 1.1, most preferably between 0.1 and 1.0,
and wherein the content of free lime is at least 10 wt. %, preferably at least 15 wt. %, relative to the total dry weight of the expansive agent.

2. The cementitious composition according to claim 1, wherein the expansive agent comprises between 15 and 55 wt. %, preferably between 25 and 55 wt. % of calcium sulfate anhydrite, relative to the total dry weight of the expansive agent.

3. The cementitious composition according to claim 1 or 2, wherein the content of the expansive agent is 0.1 to 5.0 wt. %, preferably 0.1 to 3.0 wt. %, relative to the dry weight of the cementitious composition.

4. The cementitious composition according to any of the preceding claims additionally comprising at least one supplementary cementitious material.

5. The cementitious composition according to claim 4, wherein the supplementary cementitious material is selected from the group consisting of steelmaking slag, ironmaking slag, ferronickel slag, copper slag, aluminum dross, limestone, fly ash, bottom ash, silica fume, nanosilica, volcanic ashes, pumice, trass, clays, bauxite, bio-waste residue, biochar, ashes from biowaste, ashes from municipal waste, waste glass, or mixtures thereof.

6. The cementitious composition according to claim 4 or 5, wherein the supplementary cementitious material comprises silica fume.

7. The cementitious composition according to claim 6, wherein the supplementary cementitious material further comprises ironmaking slag, preferably ground granulated blast furnace slag.

8. The cementitious composition according to any of the claims 4-7, wherein the content of the supplementary cementitious material is at least 10 wt. %, preferably at least 15 wt. %, preferably at least 20 wt. %, relative to the dry weight of the cementitious composition.

9. A hardened cementitious composition obtainable by curing the composition according to any of the preceding claims.

10. A method for grouting a wind turbine structure, said method comprising the steps of
(i) mixing water and the cementitious composition according to any of claims 1 to 8 to obtain a mixture,
(ii) pumping said mixture (i) into a void to be grouted, and
(iii) hardening the mixture of step (ii) in the void.

11. A use of an expansive agent to reduce early shrinkage of a cementitious composition, wherein the expansive agent comprises
a) ye'elimite,
b) calcium sulfate anhydrite,
c) free lime,
wherein a mass ratio of ye'elimite to free lime is between 0.01 and 1.5, preferably between 0.01 and 1.1, most preferably between 0.1 and 1.0,
and wherein the content of free lime is at least 10 wt. %, preferably at least 15 wt. %, relative to the total dry weight of the expansive agent.

12. The use according to claim 11, wherein the expansive agent comprises between 15 and 55 wt. %, preferably between 25 and 55 wt. % of calcium sulfate anhydrite, relative to the total dry weight of the expansive agent.

13. The use according to claim 11 or 12, wherein the content of the expansive agent in the cementitious composition is between 0.1 to 5.0 wt. %, preferably between 0.1 to 3.0 wt. %, relative to the dry weight of the cementitious composition.

14. The use according to any of the claims 11 - 13, wherein the cementitious composition comprises Ordinary Portland cement and at least one supplementary cementitious material, preferably silica fume and/or ground granulated blast furnace slag.

15. The use according to claim 14, wherein the cementitious composition comprises at least 10 wt. %, preferably at least 15 wt. %, preferably at least 20 wt. % of the supplementary cementitious material, relative to the dry weight of the cementitious composition.
